# EUROPEAN PATENT APPLICATION

(11) **EP 4 357 066 A1**
(43) Date of publication of application: **24.04.2024**
(21) Application number: 22202126.3
(22) Date of filing: 18.10.2022
(51) Int. Cl.: B23K 35/00, B23K 35/02, B23K 35/30, C22C 19/00, C22C 19/05

(54) **NICKEL BASED BRAZE ALLOY, A COMPONENT AND A METHOD**

(71) Applicant: Siemens Energy Global GmbH & Co. KG, 81739 München (DE)
(72) Inventor: Hasselqvist, Magnus, 61213 Finspång (SE); Gyllenhammar, Maria, 59179 Fornåsa (SE); Gustafsson, David, 58564 Linghem (SE); More, Kamlakar, 61230 Finspång (SE)

(57) **Abstract**

A Nickel base Brazing Filler Metal (BFM) consisting essentially of; about 12 to 16wt% Chromium (Cr); up to about 5wt% Fe; up to about 2 wt% Mo; about 1 to 5wt% Tungsten (W); about 3 to 6 wt% Aluminum (Al), about 3 to 6 wt% Tantalum (Ta); about 0.05 to 1.5 wt% Hafnium (Hf), about 0.01 to 0.1 wt% Carbon (C); about 0.005 to 0.05 wt% Zirconium (Zr); about 0.005 to 0.05wt% Silicon (Si); about 0.01 to 0.05 wt% of the sum of rare earths such as Sc, Yttrium (Y), the actinides and the lanthanides; about 1.7 to 2.6 wt% Boron (B); the balance being essentially Nickel (Ni) and unavoidable impurities. Its use for high strength Transient Liquid Bonding (TLB) brazing by use of capillary action on gamma prime strengthened Nickel base Superalloys in the 1180 to 1220°C range as part of production and repair processes for hot gas path components such as, but not restricted to, blades, vanes and heat shields in gas turbines. In particular, its use for tip cap closing on blades.

## Description

Brazing is a process carried out to join two or more parts.

The brazing is done at a temperature above the melting range of the brazing filler metal (BFM), but below the solidus temperatures of the base metals of the to be joined parts. The parts to be joined can include a main part made in an alloy, especially a blade alloy, taken to be a Nickel base gamma prime strengthened superalloy such as IN792 or CM247CC.

The part or parts to be brazed onto the main part can be made in the same alloy as the main part or in another Nickel base alloy.

The high performance of a Ni based alloy is provided by a microstructure with grains consisting of about 30mol% to 70mol% gamma prime particles in a gamma matrix.

Strengthening of the gamma matrix is achieved by elements such as Molybdenum (Mo), Tungsten (W) or Rhenium (Re).

Strengthening of the gamma prime particles is achieved by elements such as Titanium (Ti), Tantalum (Ta) or Niobium (Nb).

Strengthening of the grain boundaries is achieved by discrete carbides. Any elongated carbides or undesired intermetallic phases will reduce the strength and ductility. Also, such undesired intermetallic phases tend to be rich in Chromium (Cr), this will reduce the effective content and thus reduce the corrosion and oxidation resistance.

Any deviation from the nominal heat treatment process associated with the main part of the component will reduce the material properties in said main part of the component as it e.g., changes the morphology of the gamma prime particles from that identified as optimal.

The nominal heat treatment of an as cast component made in an alloy starts with a step which is ideally above the gamma prime solvus to dissolve the as cast gamma prime structure, especially the deleterious eutectic structure. This step, from here on referred to as the solutioning step, also reduces the as cast segregation of the alloy elements. It is sometimes done under a high inert gas pressure (HIP) to reduce the as cast porosity. The main parameters for this step are the solutioning temperature, the hold time at the solutioning temperature, and the cooling rate after the hold time. The nominal heat treatment then continues with one or more aging steps with prescribed temperatures and hold times below the gamma prime solvus. The aging step parameters and the cooling rate after the solutioning step need to be well controlled to produce the desired gamma prime morphology for a Ni-based alloy. The heat treatment parameters and the desired morphologies differ between different alloys.

During repair and refurbishment of a component, a nominal heat treatment is often repeated to restore the preferred gamma prime morphology which has deteriorated in service, especially in hot areas.

Alloys such as CM247CC have a potential for very high oxidation resistance thanks to an ability to form protective Al₂O₃ layers. This potential can be realized by a combination of clean production processes, especially with respect to sulfur which should be well below 10ppm, preferably below 1ppm, and alloy additions which act in synergy to gather and neutralize the remaining sulfur. This will improve the adhesion of the oxide scale and thus reduce the oxide scale spallation in service. Small levels of Silicon (Si) can also be added to increase the rate of selective oxidation of Al₂O₃. This will reduce the oxide scale thickness and this will also reduce the oxide scale spallation in service. Alloys such as IN792 get their oxidation resistance from formation of protective Cr₂O₃ layers. Clean production processes, gettering of sulfur (S) and Silicon (S)i additions to accelerate the selective oxidation has a beneficial effect also for Cr₂O₃ formers.

Elements which are commonly used for sulfur gathering are Hafnium (Hf), Zirconium (Zr) and rare earths such as Scandium (Sc), Yttrium (Y), the Lanthanides (La) and the Actinides (Ac).

C.Sarioglu, et al. The Control of Sulfur Content in Nickel-Base Single Crystal Superalloys and its Effect on Cyclic Oxidation Resistance Proceedings 'Superalloys 1996' teaches that the scale adherence is severely reduced by tramp elements such as sulfur (S), but, that this effect can be neutralized by a combination of clean casting and addition of small, measured levels of reactive elements (RE). Without RE additions, it is necessary to be well below 1ppm sulfur (S) to avoid a detrimental effect on the scale adherence.

B.A.Pint et al Effect of Cycle Frequency on High-Temperature Oxidation Behavior of Alumina- and Chromia-Forming Alloys Oxidation of Metals, 58 (1/2), 73-101 (2002) teaches that the oxide scale adherence is severely reduced by tramp elements such as sulfur (S), but, that this effect can be neutralized by a combination of clean casting and addition of smally measured levels of sulfur gathering elements.

P. Caron et al. Improvement of the Cyclic Oxidation Behaviour of Uncoated Nickel Based Single Crystal Superalloys Materials Proceedings 'Materials for Advanced Power Engineering 1994' teaches the beneficial effects when small levels of Hafnium (Hf) and Silicon (Si) are combined.

B.A.Pint et al. The use of Two Reactive Elements to Optimize Oxidation Performance of Alumina-Forming Alloys Materials at High Temperature 20(3) 375-386, 2003. J.B.Wahl, K.Harris Advances in Single Crystal Superalloys - Control of Critical Elements Proceedings '7th Parsons conference', 2007 teaches that optimal effects can be obtained when combinations of Silicon (Si) and multiple gathering elements are used, one example being the excellent cyclic oxidation resistance seen in tests on Haynes 214 which contained small levels of Zirconium (Zr), Silicon (Si) and Yttrium (Y).

When an alloy is joined to a part made in another alloy via brazing, the joint is likely to constitute a weak link in the component, and, designers are thus forced to ensure that the loadings, mechanical and environmental, are comparatively small, relative to what can be handled by the alloys. This implies a restriction on the usefulness of the component. The comparative weakness of the joint is caused by limitations in the brazing process itself and deleterious interdiffusion between the alloys.

In particular, if an alloy is brazed against the same alloy, limitations in the brazing process is what causes the weakness of the joint.

When an alloy is brazed against the same alloy, an optimal joint would be difficult to distinguish in the component; The levels of flaws such as brittle phases, pores and micro cracks would be on the low levels seen in correctly designed, manufactured and heat treated alloys; It would in fact consists of grains containing gamma prime particles in a gamma matrix; Furthermore, the grain boundaries would be strengthened by discrete carbides and borides; Furthermore, the composition of the joint would be similar to that of the alloy.

The most common group of braze alloys consists of otherwise lean Nickel base alloys, without sulfur gathering elements, which use some combination of Boron (B), Phosporous (P) and Silicon (Si) as melt depressant elements, see e.g., the selection of BNiX alloys. The advantage with these melt depressant elements is their high diffusivity. The liquidus levels are below the 1433K to 1523K range indicating use of unnecessarily high levels of melt depressant elements w.r.t. brazing in the 1453K to 1543K range.

Another group of brazing alloys consists of moderately strengthened Nickel base alloys to which Boron (B) has been added. This is exemplified by DF4B, D15, BRB, DF3 and DF6A, see table. The melt depressant additions are generally lower than in the BNiX alloys. One reason is that the liquidus levels are higher. Another reason is that there is some melt depressant synergy effect provided by the inclusion of e.g., Cobalt (Co), Aluminum (Al) and Tantalum (Ta).

DF4B has been used by the authors to braze IN792 against IN792 at 1473K.

While the results were good by normal standards, the joints were still weak links w.r.t. creep and oxidation resistance. It was seen as potential useful, for a given diffusion dwell time in the brazing, if the levels of undesired intermetallics in the joint could be further reduced and the levels of Tungsten (W) and Tantalum (Ta) in the joint increased. This would be expected to increase the creep strength in the joint for a given process cost. It was also seen as potentially useful if the oxidation resistance could be further enhanced.

There are also braze alloys based on the use of noble elements such as Palladium (Pd) as melt depressants, but these are expensive. There is furthermore Boron (B), Silicon (Si) and Phosphorus (P) free BFM's based on very high levels of Hafnium (Hf) and/or Titanium (Ti) and/or Zirconium (Zr), but there is a high risk for precipitation of undesired intermetallics if these are used. Hafnium (Hf) also has a relatively low diffusivity.

It is the aim of the invention to provide, and improved nickel based BFM, an improved joined component and an improved brazing method

The problem is solved by an alloy according to claim 1 used for transient liquid bonding at or close to the solutioning temperature for an alloy in the main part of the component fabricated via brazing, a component by claim 9 and a method by claim 10.

The BFM and the brazing process should preferably be chosen to produce a joint which is as close to the optimal joint as possible for a given cost, i.e., for a realistic limit on the length of the brazing process and the cost of the alloys involved. Also, the brazing process should be consistent with the alloy in the sense that the gamma prime size in the main part of the component should not be significantly altered by the introduction of the brazing process. Furthermore, the joint should not remelt, at worst causing displacement of a part brazed to the main part, during repair and refurbishment.

During the brazing process, melt depressant elements will diffuse from the joint into the surrounding parts. Also, alloying elements from the parts will diffuse into the joint. Melt depressant elements should preferably have a high diffusivity such that they will, for practically useful brazing parameters, end up at low innocuous levels in the surrounding parts. If the levels of these melt depressants in the BFM can be reduced, the development of a useful and cost-efficient brazing process will be made easier.

The key strengthening elements in alloys have a low diffusivity as this is why they are effective strengtheners. In particular, the gamma matrix strengthener Tungsten (W), and the gamma prime particle strengthener Tantalum (Ta), have a low diffusivity. Many high strength blade alloys such as IN792 or CM247CC accordingly contain significant levels of Tungsten (W) and Tantalum (Ta), see table. The development of a useful and cost efficient high joint strength brazing process for such blade alloys would be made easier if Tungsten (W) and Tantalum (Ta) were to be included in the BFM since this would decrease the time necessary to achieve useful Tungsten (W) and Tantalum (Ta) levels in the joint.

If the brazing is performed at the solutioning temperature for the main part, and the diffusion dwell time during the brazing is sufficiently long, the joint will solidify during the diffusion dwell time, i.e., TLB will be achieved. Then the joint will not remelt during any subsequent solutioning step, as e.g., done during repair and refurbishment. In the present invention, the brazing is preferably done to achieve TLB at or close to the solutioning temperature.

The solutioning temperatures ranges for IN792 and CM247CC are about 1473K and 1513K respectively. For a margin between the Liquidus and the brazing temperature of 20K to ensure that the BFM really is molten at the brazing temperature, this implies Liquidus levels at about 1453K-and 1493K, respectively.

During the brazing, there is a risk that sulfur (S) can be introduced via e.g. impurity in the BFM, a paste in which the BFM is contained, the production of a preform containing the BFM, the production of a foil containing the BFM, handling of the parts to be brazed, handling when the BFM is applied, handling during machining and cleaning, sulfur contained in the materials used in the furnace charging fixtures, and residual dirt in the furnace fixtures. This can reduce the oxidation resistance of the joint and the nearby material. Sulfur (S) can also reduce the wetting during the brazing. Hence there is a need for clean brazing processes. It is also helpful to include gettering elements able to neutralize sulfur (S) in the braze alloy.

The inventive alloy comprises a comparatively moderate content of Boron (B) as the main melt depressant element, no use of Silicon (Si), Phosphorous (P) or Zirconium (Zr) as melt depressants, deliberate additions of Tungsten (W) and Tantalum (Ta) for strengthening of the joint, use of a multi element recipe for sulfur (S) gathering, Silicon (Si) to boost the selective oxidation of Chromium (Cr) and Aluminum (Al) for formation of protective Cr₂O₃ and Al₂O₃, and, a Liquidus in the 1453K-and 1493K range. It further relates to high strength brazing of gamma prime strengthened Nickel base Superalloys by capillary action in the 1453K-and 1493K range. It further relates to high strength brazing as part of production and repair processes for hot gas path components such as blades, vanes and heat shields in gas turbines. It further relates to tip cap closing of blades.

The present invention belongs to the same group of nickel based BFM's as DF4B, i.e., moderately strengthened Nickel (Ni) base alloys to which Boron (B) has been added, see the embodiments SBFM 1 and SBFM2 in table. Within this group, it is characterized by; the addition of Tungsten (W) *and* Tantalum (Ta) to provide a basic strengthening of the matrix *and* the particles even without diffusion from the surrounding parts; the absence of Cobalt (Co); the inclusion of a multiple alloy element sulfur gathering recipe to neutralize sulfur entering into the brazing process; a moderate level of Boron (B); and the inclusion of Silicon (Si) to boost the selective oxidation of Chromium (Cr) and Aluminum (Al) leading to a protective oxide layer. It is further characterized by an intended brazing temperature in the 1453K to 1543K range. This blend of properties is new.

Compared to DF4B, Tungsten (W) has been added and Tantalum (Ta) increased. Even though Tungsten (W) and Tantalum (Ta) will to some extent diffuse from the parts into the joint during the brazing process, these elements diffuse slowly, hence, when Tungsten (W) and Tantalum (Ta) are present already from the start, the levels of Tungsten (W) and Tantalum (Ta) after the brazing are increased. Cobalt (Co) is eliminated and Boron (B) reduced to reduce the levels of undesired intermetallics in and around the joint despite the addition of Tungsten (W) and the increased level of Tantalum (Ta). In systems with high levels of Chromium (Cr) and Tantalum (Ta), as when e.g., IN792 is brazed, Cobalt (Co) participates in formation of undesired phases. It is also undesired in metallic powders from a health and safety point of view. Cobalt (Co) is furthermore a strategic alloy element where some of the Cobalt (Co) available on the world market comes from mining under conditions of human exploitation, hence it is an advantage to reduce the use of Cobalt (Co).

The reduction of Boron (B) is mainly enabled by the fact that the Liquidus can be allowed to increase from 1408K in DF4B to higher levels associated with brazing at the solutioning temperatures of alloys as discussed above. A reduction in Boron (B), and hence in the level of deleterious borides, is also an advantage in terms of corrosion and oxidation resistance.

Borides tend to be Chromium (Cr) rich, implying a reduction in the effective Chromium (Cr) content, and Chromium (Cr) is a key element for corrosion and oxidation resistance.

A more advanced sulfur gathering recipe than in DF4B has been included. This is e. g. useful for tip cap closing where the joint is located in a hot area and high oxidation resistance is required. The recipe is based on a synergy between Hafnium (Hf), Zirconium (Zr) and rare earths. Silicon (Si) is also included to accelerate the selective oxidation of a protective oxide scale.

Relative to D15 (table), Tungsten (W) is added, Cobalt (Co) eliminated, a multiple alloy element recipe for sulfur gettering added, and Silicon (Si) for selective oxidation added. Relative to BRB (table), Tungsten (W) and Tantalum (Ta) are added, Cobalt (Co) eliminated, a multiple alloy element recipe for sulfur (S) gathering added, and Silicon (Si) for selective oxidation added. Relative to DF3, Aluminum (Al) and Tungsten (W) are added, Cobalt (Co) eliminated, Boron (B) reduced, a multiple alloy element recipe for sulfur gettering added, and Silicon (Si) for selective oxidation added. Relative to DF6A, Aluminum (Al) and Tungsten (W) are added, Boron (B) reduced, a multiple alloy element recipe for sulfur gettering added, and Silicon (Si) for selective oxidation added.

Chromium (Cr) is included at between about 12,0wt% and 16,0wt%.

In this range it high enough to provide some melt depressant synergy effect, high enough to reduce the risk that the joint should be a weak link w.r.t. oxidation and corrosion, and low enough to avoid excessive formation of undesired phases.

Tungsten (W) is included at between about 1,0wt% and 5,0wt%.

In this range it high enough to provide a useful strengthening effect and low enough to avoid excessive formation of undesired phases.

Aluminum (Al) is included at between about 3,0wt% and 6,0wt%.

In this range it high enough to reduce the risk that the joint should be a weak link w.r.t. oxidation and corrosion, high enough to assist in the formation of gamma prime particles, and low enough to avoid excessive formation of undesired phases.

Tantalum (Ta) is included at between about 3,0wt% and 6,0wt%. In this range it high enough to provide a useful strengthening effect, high enough to provide some melt depressant synergy effect, and low enough to avoid excessive formation of undesired phases.

Boron (B) is included at between 1,7wt% and 2,5wt%.

In this range it is high enough to provide a sufficient melt depressant effect w.r.t. brazing in the 1453K to 1543K range, and low enough to avoid excessive formation of undesired phases.

Hafnium (Hf) can optionally, depending on the rest of the composition in the braze alloy, the compositions in the parts to be brazed, and, the chosen heat treatment process, have a remarkably strong catalytic effect on the microstructure. Hafnium (Hf) is often used to suppress the formation of brittle structures such as Chinese script carbides. Hafnium (Hf) may sometimes, based on in-house experience, promote formation of Hafnium (Hf) and Tantalum (Ta) rich undesired phases in the joint. Hafnium (Hf) can find and bind deleterious elements such as sulfur even when used at low levels, this has a beneficial effect on the oxidation resistance. It is included at between 0.05wt% and 1.5wt%, with the higher level consistent with blade alloys such as CM247CC, see table.

Molybdenum (Mo) is, like Tungsten (W), a potent gamma matrix strengthening element with a low diffusivity. Molybdenum (Mo) is known to be an active boride former, suggesting that it might slow down the diffusion of Boron (B) from the joint by binding it in meta stable particles, hence it is capped at 2,0wt%. With respect to consistency with blade alloys, Molybdenum (Mo) is zero in IN939, at a low level of 0,6wt% in CM247CC, and 1,5wt% and 1,8wt% in IN792. It is preferably included preferably at up to 2,0wt% to enable consistency with different alloys.

Carbon (C) is an element with a high diffusivity and can at a first glance be assumed to equilibrate easily with surrounding parts. In-house experience does however sometimes show essentially carbide free joints (which is not useful) when Carbon (C) free BFM's have been used. Our interpretation is that the carbon close to the joint is at least temporarily bound in carbo-borides as Boron (B) from the joint diffuses from the joint. There should be a lower limit on Carbon (C) to avoid completely Carbon (C) free joints, but too high levels of Carbon (C) implies a risk for formation of embrittling carbide films and elongated carbides. Carbon (C) is included at between 0,01wt% and 0,1wt%.

Silicon (Si) is an element which needs to be capped at a relatively low level of 0.05wt% to avoid brittle grain boundaries. A total elimination of Silicon (Si) can have a very adverse effect on the selective oxidation of Chromium (Cr) and Aluminum (Al). It is preferably included at preferably between 0,005wt% and 0,05wt%.

Zirconium (Zr) is an element which provides grain boundary strengthening and acts as a sulfur (S) gatherer at low measured levels. It needs to be capped at a low level since it has a tendency to segregate which could lead to incipient melting since it is a melt depressant. It is preferably included at preferably between 0,005wt% and 0,05wt%.

Iron (Fe) can increase the Aluminum (Al) activity and thus be beneficial for the oxidation resistance in and around the joint, but can also, depending on the rest of the composition in the BFM and the nearby parts, contribute to formation of undesired phases. It is preferably included at preferably up to 5,0wt%.

Rare earths such as Scandium (Sc), Yttrium (Y), the actinides and the lanthanides are potent sulfur (S) gatherers when added at low measured levels. They act in similar ways and it has been found that the use of more than one is beneficial. One cost efficient way in terms of BFM alloy cost is a mix of Cer (Ce), Lanthanides (La) and Yttrium (Y) in which smaller levels of other rare earths may also be found. A combination of La and Yttrium (Y) has been found to be beneficial in tests on CMSX-4. The use of either La or Yttrium (Y) is convenient in the sense that many powder vendors are used to these rare earths. Rare earths are preferably included at preferably between about 0,01wt% and 0,05wt%.

The alloys of the to be joined parts to a component are different to the brazing alloy, means the alloys of the to be joined parts have at least one alloying element more or less or differ at least at one content of one alloying element by at least 10%, especially by at least 20%.

### Test results

The creep test specimen was designed for testing of alloys brazed against blade alloys. An angled joint is subjected to a combination of tensile and shear loading. Creep tests have been done on specimen in which the upper and lower parts were made from IN792 bar stock. Tests were done after brazing with DF4B and SBFM2 which is an embodiment of the current invention, see table.

The joint brazed using SBFM2 had a creep strength which is about 3 times as high as for brazing with DF4B. The geometries, preparation, and BFM application was done in the same way for DF4B and SBFM2.

**Table**

| Alloy | Ni | Cr | Fe | Co | Mo | W | Al | Ti | Ta | Hf | C | B | Zr | Si | P | La | Y |
|---|---|---|---|---|---|---|---|---|---|---|---|---|---|---|---|---|---|
| IN792 | B | 12.5 | | 8.5 | 1.8 | 4 | 3.4 | 4 | 4 | 0.5 | 0.07 | 0.015 | 0.02 | | | | |
| CM247CC | B | 8 | | 9.5 | 0.6 | 9.5 | 5.6 | 0.7 | 3.2 | 1.4 | 0.07 | 0.015 | 0.01 | | | | |
| STAL125CC1 | B | 12.5 | | 5 | 1.5 | 3.5 | 5.5 | | 8 | 0.5 | 0.07 | 0.015 | 0.01 | 0.01 | | | |
| DF4B | B | 14 | | 10 | | | 3.5 | | 2.5 | | | 2.8 | | | | | 0.02 |
| D15 | B | 15 | | 10.3 | | | 3.5 | | 3.5 | | | 2.3 | | | | | |
| BRB | B | 13.5 | | 9.5 | | | 3.7 | | | | | 2.5 | | | | | |
| DF3 | B | 20 | | 20 | | | | | 3 | | | 3 | | | | 0.05 | |
| DF6A | B | 20 | | | | | | | 3 | | | 3.2 | | | | | 0.03 |
| SBFM1 | B | 14 | | | | 2 | 3.5 | | 3.5 | | 0.05 | 2.5 | 0.01 | 0.01 | | | 0.02 |
| SBFM2 | B | 14 | | | | 2 | 3.5 | | 3.5 | | 0.05 | 2.1 | 0.01 | 0.01 | | | 0.02 |
| BNi1a | B | 14 | | | | | | | | | 0.06 | 3.2 | | 4.5 | | | |
| BNi2 | B | 7 | 3 | | | | | | | | 0.06 | 3 | | 4.5 | | | |
| BNi5 | B | 19 | | | | | | | | | 0.06 | | | 10.1 | | | |
| BNi6 | B | | | | | | | | | | 0.06 | | | | 11 | | |
| BNi9 | B | 15 | | | | | | | | | 0.06 | 3.6 | | | | | |

## Claims

1. A nickel base alloy (in wt%)
which comprises
12,0% to 16,0% Chromium (Cr),
1,0% to 5,0% Tungsten (W),
3,0% to 6,0% Aluminum (Al),
3,0% to 6,0% Tantalum (Ta).
0,01% to 0,1% Carbon (C),
1,7% to 2,6% Boron (B)
Nickel (Ni),
especially the balance being essentially Nickel (Ni)
and unavoidable impurities,
optionally
0,01% to 0,05% of the sum of the rare earths from the group of Scandium (Sc), Yttrium (Y), the Lanthanides (La) and the Actinides (Ac),
especially at least two of these elements are included,
and/or
0,05% and 1,5% Hafnium (Hf)
and/or
0,005% and 0,05% Zirconium (Zr)
and/or
0,005% and 0,05% Silicon (Si)
and/or
0,2% to 2,0% Molybdenum (Mo)
and/or
0,2% to 5,0% Iron (Fe)

2. A nickel base alloy as claimed in claim 1,
which comprises (in wt%)
13,0% to 15,0% Chromium (Cr);
1,0% to 3,0% Tungsten (W),
3,0% to 4,0% Tantalum (Ta).

3. A nickel base alloy as claimed in claim 1,
which comprises (in wt%)
13,5% to 14,5% Chromium (Cr)
1,5% to 2,5% Tungsten (W),
3,2% to 3,8% Tantalum (Ta),
0,03% to 0,07% Carbon (C),
1,9% to 2,2% Boron (B).

4. A nickel base alloy as claimed in claim 1,
which comprises (in wt%)
13,5% to 14,5t% Chromium (Cr);
1,5% to 2,5% Tungsten (W),
3,2% to 3,8% Tantalum (Ta);
0,03% to 0,07% Carbon (C);
2,3% to 2,5% Boron (B).

5. A nickel base alloy as any of the preceding claims,
which comprises
0,01wt% and 0,05wt% of the sum of Lanthanides (La) and Yttrium (Y), especially at least 0,005wt% Lanthanides (La) and preferably at least 0,005wt% Yttrium (Y).

6. A nickel base alloy as any of the preceding claims,
which comprises
0,01wt% and 0,05wt% Lanthanides.

7. A nickel base alloy as any of the preceding claims
which comprises
0,01wt% and 0,05wt% Yttrium (Y).

8. A nickel base alloy as any of the preceding claims
which comprises
14,0wt% Chromium (Cr);
2,0wt%Tungsten (W);
3,5wt% Aluminum (Al);
3,5wt% Tantalum (Ta);
0,05wt% Carbon (C);
2,1wt% Boron (B);
0,01wt% Silicon (Si);
0,01wt% Zirconium (Zr);
0,02wt% Yttrium (Y),
optionally
0,01wt% Hafnium (Hf).

9. A nickel base alloy as any of the preceding claims,
which comprises
14,0wt% Chromium (Cr);
2,0wt% Tungsten (W);
3,5wt% Aluminum (Al);
3,5wt% Tantalum (Ta);
0,05wt% Carbon (C);
2,5wt% Boron (B);
0,01wt% Silicon (Si);
0,01wt% Zirconium (Zr);
0,02wt% Yttrium (Y),
optionally
0,01wt% Hafnium (Hf).

10. Component
comprising two parts of Ni-based or Co-based alloys,
having a joint made of an alloy according to any of the claims 1 to 9.

11. Method to join two parts of Ni-based or Co-based alloys,
wherein an alloy according to any of the claims 1 to 9 is used.
